# EUROPEAN PATENT SPECIFICATION

(11) **EP 3 164 967 B1**
(45) Date of publication and mention of the grant of the patent: **29.08.2018**
(21) Application number: 14734172.1
(22) Date of filing: 02.07.2014
(51) Int. Cl.: H04L 29/08, G08C 17/00, H04L 12/28, H04M 1/725, H05B 33/08, H04W 4/00, H04W 4/20

(54) **ELECTRICAL HOUSEHOLD APPLIANCE NETWORK COMMUNICATION METHOD**
NETZWERKKOMMUNIKATIONSVERFAHREN FÜR ELEKTRISCHES HAUSHALTSGERÄT
PROCÉDÉ DE COMMUNICATION EN RÉSEAU D'UN APPAREIL ÉLECTROMÉNAGER

(43) Date of publication of application: 10.05.2017
(73) Proprietor: Arçelik Anonim Sirketi, 34950 Istanbul (TR)
(72) Inventor: AYTEKIN, Burcak, 34950 Istanbul (TR); CETINKAYA, Ebru, 34950 Istanbul (TR); KAYA, Deniz, 34950 Istanbul (TR); KURT, Fatih, 34950 Istanbul (TR); OZCELIK, Ihsan Mert, 34950 Istanbul (TR)
(86) International application number: PCT/EP2014/064008
(87) International publication number: WO 2016/000768

(56) References cited:
- US-A1- 2014 148 147
- US-A1- 2014 167 935

## Description

The present invention relates to an electrical household appliance which can be remotely controlled in a more intuitive manner from a remote location by way of remotely connecting to the same in a wireless communication network.

Electrical household appliances such as for instance laundry treatment appliances or refrigerators have controls capable of performing different functions with physical keys or navigation arrows to select on-screen signs. It is well-known that such appliances are also programmable to execute remotely programmed functions. For example, a rotary electrical machine can be programmed remotely through a network connection to fulfill certain tasks, such programming involving an improved computer interface for example as in the case of a special personal computer control interface or a smart phone application.

Among others, a prior art publication in the technical field of the invention may be referred to as US 2005 136892, which discloses a system and method providing secure authentication of a wireless communication channel for a vehicle telematics device that includes detecting a wireless Access Point (AP) within radio range of a telematics device, requesting authentication information for the Access Point through a first secure communication channel to a call center, receiving authentication information for the wireless Access Point from the call center through the first secure communication channel, and providing authentication information for the telematics device to the wireless Access Point through a second secure communication channel.

As described in US 2005 136892, the secure authentication of the wireless communication is provided by using a first secure communication channel to a call center and a second secure communication for providing received authentication information for the telematics device to the wireless Access Point of the wireless communication network. US2014/0167935 describes a communication method including steps of receiving connection requests from remote sources, priority between different remote terminals determined at the appliance, one of them prioritized and getting read and write access, others get only read-only access. Moreover, a direct contact user who is in the vicinity of the appliance can override a remote control user.

US2014/0148147 is concerned with the prioritization problem between remote user and local user, which implies that the panel/ screen of the appliance is on during remote control.

The problem associated with the network connection procedures of household appliances such as for instance rotary machines, i.e. laundry treatment machines, refrigerators and so on is that a plurality of different users may simultaneously try to establish a remote connection with these machines, which might lead to operational problems such as conflicting commands being processed.

The present invention provides a wireless communication method for remotely controlling an electrical household appliance by which a plurality of users can connect and control the appliance from remote locations in a manner that processing of conflicting commands are avoided as provided by the characterizing features defined in Claim 1.

Primary object of the present invention is to provide a wireless communication method for remotely controlling an electrical household appliance simultaneously connectable to a plurality of remote users/terminals.

The present invention proposes a wireless communication method by which an electrical household appliance is remotely accessible and controllable such that a plurality of users can connect from a remote location.

If concurrent connection requests are received, the first user is granted administrator rights and obtains read and write access to modify operational settings of the electrical household appliance. Other than the first remote terminal, all the remaining remote terminals are granted read only access to obtain information and monitor the operational status of the electrical household appliance.

The appliance is operated at a reduced power mode in case a remote terminal is granted read and write access. In reduced power mode, energization of the front panel effecting illumination thereof is interrupted. A visual indication means in the form of an indication LED provides information as to the connection status of the appliance. If at least one terminal having read only access is present, a yellow indication light is on and if one terminal having read and write access is connected, power transfer to the front panel to illuminate the same is terminated.

Accompanying drawing is given solely for the purpose of exemplifying a wireless communication method for an electrical household appliance whose advantages over prior art were outlined above and will be explained in brief hereinafter.

The drawings are not meant to delimit the scope of protection as identified in the claims nor should they be referred to alone in an effort to interpret the scope identified in said claims without recourse to the technical disclosure in the description of the present invention.

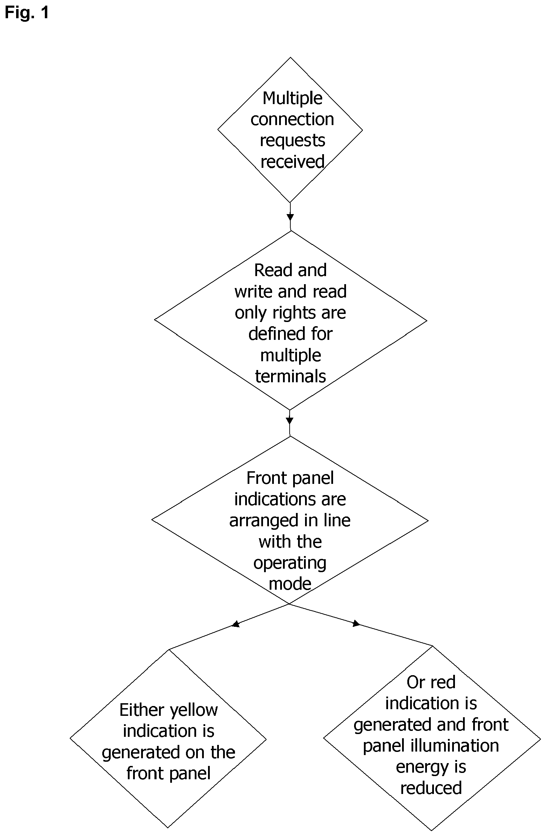

Fig. 1 demonstrates a general flow diagram representation of the communication method according to the present invention.

The present invention proposes a communication method for simultaneous remote control of an electrical household appliance by a plurality of remote terminals/users.

According to the present invention, an electrical household appliance such as for instance a washing machine can be controlled by way of connecting to the appliance by a portable terminal. A mobile application running on the portable terminal can have a special interface dedicated to control various functions by performing a specific set of system operation functions. For instance a user can initiate a specific washing program defined for the specific product/model on the mobile application and transmit the specified set of actions to the appliance, upon which the appliance will execute the specified set of actions.

For instance a refrigerator or a rotating electrical machine such as a laundry treatment machine may have a relatively basic user interface on which users set several operational parameters by means of buttons and knobs, but such interfaces may not involve a more advanced user input panel with a graphic screen interface or textual information inputting means such as a keyboard. A household appliance definable as a relatively low-budget appliance as well as an appliance having a more advanced control panel interface can remotely be controlled by the method of the invention.

It is to be noted that, apart from setting operational parameters of the appliance, the user can also remotely get updated information in respect of the operational status of the appliance at any time. The user can therefore monitor the operational status of his/her household appliance. For instance, when a selected washing program is initiated, the user can get detailed information in respect of the ongoing wash cycles and expected remaining durations from the mobile application by way of loading updated information.

The household appliance implementing the method according to the present invention is conventionally equipped with a network board, or a network interface board, which is commonly referred to as a network adapter. It is preferably built into the main circuit board of the appliance as conventionally practiced, or may be built separately.

The household appliance may conventionally connect to a wireless (Wi-Fi) network by way of establishing a secure connection link with a wireless communication device, said network typically being a home network made up of several components such as computers, an Internet connection, and a wireless router. The wireless router conventionally acts as the center of the network as it shares the remote connection and other access to all connected devices. A portable terminal such as for instance a cell phone, a Smartphone, a personal digital assistant (PDA) can hence communicate with the appliance.

According to the present invention, the electrical household appliance being remotely connectible with a plurality of users allows a plurality of remote connections while only one of these remote terminals is granted read and write access at a given moment. Therefore, only one of the connected users can set several operational parameters and control various functions so as to perform a specific set of system operation functions. On the other hand, a plurality of remote users with read only access can simultaneously connect and get updated information in respect of the operational status of the appliance and monitor the appliance.

The electrical household appliance operates at a reduced power mode if a remote user is granted read and write access. If the reduced power mode is activated, illumination of the front panel, i.e. illumination of any of the user interface buttons or knobs, user input control panels, graphic screen interfaces or textual information inputting means is reduced or discontinued. To this end, a read and write access remote connection will automatically initiate reduced power mode irrespective of whether another user is in fact physically in the vicinity of the appliance. In this case, the nearby user will be notified of the remote connection status of the household appliance by means of a visual indication means such as an indication LED, as will be delineated below.

According to the present invention, an indication LED can light up yellow or red depending on the situation. For instance, when at least one remote terminal is connected to the electrical household appliance, the indication LED can light up yellow and the front panel user control interface remains illuminated and powered, and when a remote terminal with read and write rights is connected, the indication LED lights up red and power dissipation in the front panel user control interface is terminated. It is to be noted that the ongoing operation of the appliance remains unchanged other than the illumination of the front panel user control interface. It is also to be noted that a user near the front panel of the appliance can overwrite or change the operational parameters being set by a remote terminal. The user nearby can also disable remote connectivity of the appliance. The illumination of the front panel user control interface may alone involve a noticeable energy saving since such control interfaces may have large screens, which get more and more enlarged especially in higher-end products.

Therefore, while a yellow indication might reveal that at least one remote connection with read only rights is established, a red light indicates that the appliance is currently controlled by a remote terminal. The front panel being unilluminated, the indication LED lighting up red manifests itself in a more noticeable manner.

In a nutshell, the present invention proposes a wireless communication method for remotely controlling an electrical household appliance by which a plurality of users connect to said electrical household appliance from a remote location, said electrical household appliance comprising a front panel functioning as a user control interface, said method comprising the steps of; a) simultaneously receiving a plurality of connection requests from remote terminals in a communication network, b) granting one of the remote terminals read and write access, and c) granting read only access to a plurality of remote terminals being not granted read and write access.

In one embodiment of the present invention, the electrical household appliance is operated at a reduced power mode if a remote terminal is granted read and write access.

In a further embodiment of the present invention, a read and write access remote connection automatically initiates reduced power mode upon which energization of the front panel effecting illumination thereof is interrupted.

In a still further embodiment of the present invention, a visual indication means is operated and a visual indication is generated on the front panel such that users are notified of remote connection status of the electrical household appliance.

In a yet still further embodiment of the present invention, the visual indication means is an indication LED.

In a yet still further embodiment of the present invention, the indication LED generates a first light color when at least one remote terminal with read only rights is connected, upon which the front panel remains illuminated and powered.

In a yet still further embodiment of the present invention, the indication LED generates a second light color when one remote terminal with read and write rights is connected, upon which power dissipation in the front panel is terminated.

In a yet still further embodiment of the present invention, said method is implemented on a refrigerator or a rotary electrical machine appliance such as a laundry treatment machine.

It is to be noted that the simplistic yet efficient approach adopted by the present invention provides a practical way of controlling a household appliance remotely by a plurality of terminals in a manner that processing of conflicting commands are avoided.

## Claims

1. A wireless communication method for remotely controlling an electrical household appliance by which a plurality of users connect to said electrical household appliance from remote locations, said electrical household appliance comprising a front panel functioning as a user control interface, said method comprising the steps of:
- simultaneously receiving a plurality of connection requests from remote terminals in a communication network,
- granting one of the remote terminals read and write access, and
- granting read only access to a plurality of remote terminals being not granted read and write access,
**characterized in that** the electrical household appliance is operated at a reduced power mode if a remote terminal is granted read and write access and a read and write access remote connection automatically initiates reduced power mode upon which energization of the front panel effecting illumination thereof is interrupted.

2. A wireless communication method as in Claim 1, **characterized in that** a visual indication means is operated and a visual indication is generated on the front panel such that users are notified of remote connection status of the electrical household appliance.

3. A wireless communication method as in Claim 2, **characterized in that** the visual indication means is an indication LED.

4. A wireless communication method as in Claim 3, **characterized in that** the indication LED generates a first light color when at least one remote terminal with read only rights is connected, upon which the front panel remains illuminated and powered.

5. A wireless communication method as in Claim 3 and 4, **characterized in that** the indication LED generates a second light color when one remote terminal with read and write rights is connected, upon which power dissipation in the front panel is terminated.

6. A wireless communication method as in any preceding Claims, **characterized in that** said method is implemented on a refrigerator or a rotary electrical machine appliance in the form of a laundry treatment machine.

## Patentansprüche

1. Drahtloses Kommunikationsverfahren zur Fernsteuerung eines elektrischen Haushaltsgeräts, mit dem eine Mehrzahl von Benutzer mit dem elektrischen Haushaltsgerät aus entfernten Standorten verbunden sind, umfassend ein Frontpaneel, das als eine Benutzerschnittstelle funktioniert, umfasst, wobei das Verfahren die folgenden Schritte umfasst:
- gleichzeitigen Empfang von einer Mehrzahl von Verbindungsanforderungen von Fernterminals in einem Kommunikationsnetz,
- Gewährung einem der Fernterminals Lese- und Schreibzugriff und
- Gewährung von nur Lese-Zugriff auf eine Mehrzahl von Fernterminals, denen kein Lese- und Schreibzugriff gewährt wird,
**dadurch gekennzeichnet, dass** das elektrische Haushaltsgerät in dem reduzierten Leistungsmodus betrieben wird, wenn dem Fernterminal Lese- und Schreibzugriff gewährt wird und eine Fernverbindung mit Lese- und Schreibzugriff automatisch einen reduzierten Leistungsmodus einleitet, worauf die Erregung des Frontpaneels, die dessen Beleuchtung bewirkt, unterbrochen wird.

2. Drahtloses Kommunikationsverfahren nach Anspruch 1 **dadurch gekennzeichnet, dass** ein visuelles Anzeigemittel betrieben wird und eine visuelle Anzeige auf dem Frontpaneel erzeugt wird, sodass Benutzer über einem Fernverbindungsstatus des elektrischen Haushaltsgeräts informiert wird.

3. Drahtloses Kommunikationsverfahren nach Anspruch 2 **dadurch gekennzeichnet, dass** ein visuelles Anzeigemittel eine Anzeige-LED ist.

4. Drahtloses Kommunikationsverfahren nach Anspruch **3 dadurch gekennzeichnet, dass** die Anzeige-LED eine erste Lichtfarbe erzeugt, wenn mindestens einem Fernterminal mit dem schreibgeschützten Rechte verbunden ist, worauf das Frontpaneel beleuchtet und eingeschaltet bleibt.

5. Drahtloses Kommunikationsverfahren nach Anspruch 3 oder 4, **dadurch gekennzeichnet, dass** die Anzeige-LED eine zweite Lichtfarbe erzeugt, wenn ein Fernterminal mit Zugriffsrechten zum Lesen und Schreiben verbunden ist, worauf Leistungsverlust beendet ist.

6. Drahtloses Kommunikationsverfahren nach einem der vorangehenden Ansprüche, **dadurch gekennzeichnet, dass** das Verfahren auf einem Kühlgerät oder rotierende elektrische Maschine in Form eines Wäschebehandlungsmaschine implementiert ist.

## Revendications

1. Procédé de communication sans fil pour commander à distance un appareil électroménager par lequel une pluralité d'utilisateurs se connectent audit appareil électroménager à partir d'emplacements distants, ledit appareil électroménager comprenant un panneau avant fonctionnant comme une interface de commande d'utilisateur, ledit procédé comprenant les étapes consistant à:
- recevoir simultanément une pluralité de demandes de connexion provenant de terminaux distants dans un réseau de communication,
- accorder à l'un des terminaux distants un accès en lecture et en écriture, et
- accorder d'un accès en lecture seule à une pluralité de terminaux distants n'étant pas autorisé à accéder en lecture et en écriture,
**caractérisé en ce que** l'appareil électroménager fonctionne en mode de puissance réduite si un terminal distant reçoit un accès en lecture et en écriture et une connexion à distance en accès en lecture et en écriture déclenche automatiquement un mode de puissance réduite sur lequel l'excitation du panneau avant effectuant l'illumination est interrompue.

2. Procédé de communication sans fil selon la revendication 1, **caractérisé en ce qu'**un moyen d'indication visuelle est actionné et une indication visuelle est générée sur le panneau avant de manière à informer les utilisateurs de l'état de connexion à distance de l'appareil électroménager.

3. Procédé de communication sans fil selon la revendication 2, **caractérisé en ce que** les moyens d'indication visuelle sont une DEL d'indication.

4. Procédé de communication sans fil selon la revendication 3, **caractérisé en ce que** la DEL d'indication génère une première couleur de lumière lorsqu'au moins un terminal distant avec des droits en lecture seule est connecté, sur lequel le panneau avant reste allumé et alimenté.

5. Procédé de communication sans fil selon les revendications 3 et 4, **caractérisé en ce que** la DEL d'indication génère une seconde couleur de lumière lorsqu'un terminal distant avec des droits de lecture et d'écriture est connecté, sur lequel la dissipation de puissance dans le panneau frontal est terminée.

6. Procédé de communication sans fil selon l'une quelconque des revendications précédentes, **caractérisé en ce que** ledit procédé est mis en oeuvre sur un réfrigérateur ou un appareil de machine électrique tournante sous la forme d'une machine de traitement de linge.
